(19) **Europäisches Patentamt**

**European Patent Office**

**Office européen des brevets**

(11) **EP 0 808 474 B1**

(12) **EUROPÄISCHE PATENTSCHRIFT**

(45) Veröffentlichungstag und Bekanntmachung des Hinweises auf die Patenterteilung:
**08.10.2003 Patentblatt 2003/41**

(21) Anmeldenummer: **96904029.4**

(22) Anmeldetag: **08.02.1996**

(51) Int Cl.[7]: **G02B 21/22**

(86) Internationale Anmeldenummer:
**PCT/EP96/00533**

(87) Internationale Veröffentlichungsnummer:
**WO 96/024875 (15.08.1996 Gazette 1996/37)**

(54) **VERFAHREN UND ANORDNUNG ZUR HOCHAUFLÖSENDEN STEREOMIKROSKOPIE MIT ERWEITERTER RAUMTIEFE**

PROCESS AND DEVICE FOR HIGH-RESOLUTION STEREOMICROSCOPY WITH EXTENDED SPACIAL DEPTH

PROCEDE ET DISPOSITIF DE STEREOMICROSCOPIE A HAUTE RESOLUTION ET A PROFONDEUR SPATIALE AUGMENTEE

(84) Benannte Vertragsstaaten:
**CH DE FR GB IT LI NL**

(30) Priorität: **08.02.1995 DE 19504108**
**30.05.1995 DE 19519687**

(43) Veröffentlichungstag der Anmeldung:
**26.11.1997 Patentblatt 1997/48**

(73) Patentinhaber:
  • **Schwertner, Dietmar**
    **07743 Jena (DE)**
  • **Schwertner, Michael**
    **07745 Jena (DE)**

(72) Erfinder:
  • **Schwertner, Dietmar**
    **07743 Jena (DE)**
  • **Schwertner, Michael**
    **07745 Jena (DE)**

(74) Vertreter: **Kruspig, Volkmar, Dipl.-Ing. et al**
**Patentanwälte**
**Meissner, Bolte & Partner**
**Postfach 86 06 24**
**81633 München (DE)**

(56) Entgegenhaltungen:
  • **APPLIED OPTICS, Bd. 12, Nr. 10, Oktober 1973, NEW YORK US, Seiten 2509-2519, XP002007157 J.S. COURTNEY-PRATT ET AL.: "Microscope with enhanced depth of field and 3-D capability"**
  • **ICASSP 86 (INTERNATIONAL CONFERENCE ON ACOUSTICS, SPEECH, AND SIGNAL PROCESSING), 7. - 11.April 1986, TOKYO, XP002007158 S. KAWATA ET AL.: "Constrained resolution enhancement in optical microscopic tomography"**
  • **APPLIED OPTICS, Bd. 22, Nr. 10, 15.Mai 1983, NEW YORK US, Seiten 1449-1453, XP002007159 R.J. PIEPER ET AL.: "Image processing for extended depth of field" in der Anmeldung erwähnt**
  • **Prospekte der Firma Schwertner GbR: "DigitalOptisches Mikroskopsystem DOM"**

## Beschreibung

Die Erfindung betrifft ein Verfahren und eine Anordnung zur Durchführung des Verfahrens zur hochauflösenden Stereomikroskopie mit erweiterter Raumtiefe.

Es findet Anwendung bei einkanaligen Mikroskopsystemen, insbesondere bei einobjektivigen konventionellen Lichtmikroskopen. Die Erfinding ermöglicht die stereoskopische Darstellung der räumlichen Struktur mikroskopischer Objekte bei hohen Vergrößerungen ohne Auflösungsverlust.

Bekannte stereomikroskopische Beobachtungsverfahren basieren auf zweikanaligen Mikroskopsystemen, z. B. Greenough-Typ, und beschränken sich auf kleine Vergrößerungen (100x). Eine weitere Steigerung der Vergrößerung ist auf Grund der kleinen Objektivapertur nicht sinnvoll.

Eine hochauflösende stereomikroskopische Beobachtung bei hohen Vergrößerungen konnte sich aufgrund der fehlenden räumlichen Tiefe nicht durchsetzen.

Konfokale Laserscanning-Verfahren beseitigen zwar diesen Nachteil, bedingen aber Einschränkungen bezüglich der Art der mikroskopischen Objekte und Kontrastverfahren.

Die aus Abbott and Nugent: "3-D Widefieldmicroscopy"; in Bioimaging (1993) S. 207-213 bekannte Anwendung der aus der konfokalen Mikroskopie bekannten Technik optischer Schnitte auf konventionelle Lichtmikroskope hoher Auflösung ermöglicht zwar den Zugang zu weiteren Objektklassen, zeigt jedoch prinzipielle Probleme bei der 3D-Rekonstruktion.

Die Entwicklung der konfokalen Laserscanning-Mikroskopie gestattet durch eine Verbesserung des longitudinalen Auflösungsvermögens die Aufnahme von 3D-Bildinformationen. Dabei wird die räumliche Struktur des mikroskopischen Objektes durch eine Serie optischer Schnitte erfaßt und in Form eines 3D-Datensatzes im Computer gespeichert. Mittels geeigneter Software ist dann die 3D-Rekonstruktion des mikroskopischen Objektes möglich.

Bedingt durch die konfokale Anordnung des Mikroskopsystems treten aber starke Intensitätsverluste auf, so daß die hochauflösende räumliche Darstellung bisher nur bei stark fluoreszierenden oder reflektierenden Objekten befriedigende Ergebnisse zeigte.

In letzter Zeit wurde versucht, die aus der konfokalen Laserscanning-Mikroskopie bekannten Technik der optischen Schnitte auch auf konventionelle Lichtmikroskopie mit dem Ziel anzuwenden, auch nicht fluoreszierende und schwach kontrastierende Objektstrukturen einer dreidimensionalen Beobachtung zugänglich zu machen.

Dabei besteht die Notwendigkeit, die im Vergleich zu konfokalen Mikroskopsystemen schlechte longitudinale Auflösung der 3D-Bildinformationen zu verbessern.

Hierzu wurde vorgeschlagen, lineare Bildverarbeitungstechniken einzusetzen, die auf Fouriertransformationsverfahren in Verbindung mit inversen Filtertechniken beruhen.

(Vgl. Byron Willis u.a.:"Developments in Three-Dim. Stereo Brightfield Microscopy research and Technique 24 (1993) S. 437-451).

Auf Grund der räumlichen Struktur der optischen Übertragungsfunktion des konventionellen Lichtmikroskops ist jedoch die vollständige Unterdrückung von Bildinformationen aus benachbarten optischen Schnitten prinzipiell nicht möglich. Dadurch kann der Auflösungsgrad der Bildinformation in lateraler Richtung nicht wie bei optischen Schnitten mit konfokaler Laserscanningtechnik durch einen gleichwertigen Auflösunsgrad in longitudinale Richtung ergänzt werden.

Die durch optische Schnitte mit konventionellen Lichtmikroskopen erreichbaren Datenstrukturen sind somit nicht ausreichend für eine erfolgreiche 3D-Rekonstruktion des mikroskopischen Objektes analog zu konfokalen Lasersanningtechniken.

Aus Applied Optics, Oktober 1973, Volume 12, No. 10 ist eine Mikroskopanordnung vorbekannt, wobei dort von einem einobjektivigem Mikroskop ausgegangen wird, bei dem die beiden Teilbilder eines Stereobildpaares durch sogenannte Puppillenteilung erzeugt werden. Bei einem solchen Prinzip ergibt sich aber eine Teilung der verfügbaren numerischen Apertur des Objektives. Weiterhin offenbart die genannte Literaturstelle ein Scannen in Richtung der optischen Achse, wobei die Scannfunktion durch ein Verändern der Wellenlänge durch Wechsel eines Farbfilters im Beleuchtungsstrahlengang des Mikroskops erreicht wird. An die Bandbreite eines solchen Filters sind jedoch sehr hohe Anforderungen zu stellen, da ansonsten ein unscharfes Bild entsteht.

Auf Schnittbildstapel wird in der Veröffentlichung von S. Kawata, O. Nakamura und S. Minami; ICASSP 86 PROCEEDINGS, Seite 1753 bis 1756 aufmerksam gemacht. Allerdings wird nach Auffassung der Autoren darauf hingewiesen, daß die Nutzung von Schnittbildstapeln Nachteile und Mängel aufweist und daher nicht zu empfehlen sei. Konkret wird im erwähnten Artikel auf die Verbesserung der Z-Auflösung bei optischen Mikroskopen eingegangen. Eine Erhöhung der Z-Auflösung entspricht jedoch einer optischen Verringerung der Schärfentiefe. Hintergrund ist hier die in den 80-er Jahren begonnene Realisierung konfokaler Laser-Scan-Mikroskope, bei denen eine erhöhte Z-Auflösung durch den Einsatz von Raumfilterblenden erreicht wurde. Eine so verbesserte Z-Auflösung bildete die Grundlage zum dreidimensionalen Scannen mikroskopischer Objekte und zur Erstellung von 3D-Datensätzen. Aus diesen 3D-Datensätzen wird durch Ableitung von Stereobildpaaren eine hochauflösende Darstellung von mikroskopischen Objekten möglich. Bedingt durch die optische Anordnung können jedoch nur Auflichtobjekte dargestellt werden.

Alle Arbeiten zur Erhöhung der Z-Auflösung bei konventionellen Hellfeldmikroskopen dienten dem Ziel, die Funktion der Raumfilterblenden von Laser-Scan-Mikroskopen auf konventionelle Mikroskope zu übertragen, um auch dort durch die Erzeugung von 3D-Datensätzen eine hochauflösende stereoskopische Darstellung zu ermöglichen, dann aber mit dem Vorteil, auch Durchlichtobjekte darstellen zu können. Letzterer Aspekt ist deshalb von großer Wichtigkeit, da die überwiegende Anzahl biologischer Objekte Durchlichtobjekte sind.

Als weitere Möglichkeit zur Verbesserung der Z-Auflösung wird im zitierten Artikel die Anordnung eines optical microscopic tomography system angegeben. Durch Rotation der gezeigten offaxis pupil werden zwar Bilder mit einer Vielzahl unterschiedlicher paralaktischer Projektionen hergestellt, verbunden jedoch mit den Nachteilen durch Pupillenteilung. Die Abbildungen werden nicht paarweise als Stereobild verwendet, sondern dienen alle zusammen der Feststellung oder Erstellung einer einzigen Abbidung mit erhöhter Z-Auflösung, d.h. eines optischen Schnittes geringer Schärfentiefe. Durch die Pupillenteilung des Objektivs werden zwar zunächst Abbildungen größerer Schärfentiefe, jedoch geringerer Auflösung entstehen, die dann durch die Anwendung des Tomographieverfahrens zu einer Abbildung sehr geringer Schärfentiefe, also noch höherer Z-Auflösung führen sollen. Der entscheidende Nachteil der vorgeschriebenen Lösung ist jedoch, daß die Verbesserung der Z-Auflösung mit einer Verschlechterung der lateralen Auflösung erkauft wird.

Aus dem Vorgenannten ist es daher Aufgabe der Erfindung ein Verfahren und eine Anordnung zur hochauflösenden Stereomikroskopie mit erweiterter Raumtiefe unter Verwendung eines konventionellen Lichtmikroskops anzugeben, welches die zitierten Nachteile des Standes der Technik vermeidet.

Die Lösung der Aufgabe der Erfindung erfolgt verfahrensseitig mit einer Lehre nach Patentanspruch 1 sowie mit einer Anordnung nach den Merkmalen des Patentanspruches 10, wobei die Unteransprüche Ausgestaltungen und Weiterbildungen darstellen.

Gemäß der Erfindung wird die parallaktische Bildinformation bereits direkt bei der Bildgenerierung aufgenommen und nicht erst durch Projektion aus einem 3D-Datenwürfel abgeleitet .

Die Nachteile einer vollständigen 3D-Rekonstruktion werden vermieden, indem auf eine Schärfentiefenerweiterung (STE) von zwei parallaktischen 2D-Projektionen übergegangen wird. Diese wird durch ein nichtlineares elektronisches Bildverarbeitungsverfahren erzeugt und führt zu einer stereoskopischen Darstellung in Form von Stereobildpaaren mit erweiterter Raumtiefe.

Durch das Verfahren ergeben sich bei seiner Anwendung auf dem Gebiet der konventionellen Lichtmikroskopie vorteilhafte Mikroskopsysteme, welche im Vergleich zu konfokalen Laserscanning-Mikroskopen weniger kostspielig sind und die darüber hinaus für bisher nicht zugängliche Objektklassen eine hochauflösende stereoskopische Beobachtung zulassen. Die bisherigen klassischen Kontrastverfahren der Lichtmikroskopie sind weiterhin nutzbar und werden durch neue, computergenerierte Kontrastverfahren ergänzt.

Verglichen mit konfokalen Laserscanning-Mikroskopen ist eine deutlich kostengünstigere Computerausrüstung einsetzbar und es wird weniger Rechenzeit benötigt.

Das erfindungsgemäße Verfahren sowie die zugehörige Anordnung sollen anhand von Ausführungsbeispielen und unter Zuhilfenahme von Figuren näher erläutert werden erläutert.

Hierbei zeigen:

Fig. 1     eine prinzipielle Darstellung des Ablaufes des Verfahrens zur hochauflösenden Stereomikroskopie mit erweiterter Raumtiefe;

Fig. 2     die Verhältnisse im Objektraum des Mikroskops;

Fig. 3     die Projektionsrichtungen der optischen Abbildungen der linken und rechten Schnittbildserien;

Fig. 4     eine Anordnung zur Bildgenerierung durch zeitmultiplex schaltbare Objektivbaugruppen, die im abbildungsseitigen Strahlengang des Mikroskops angeordnet sind;

Fig. 5     eine technische Realsierungsform einer Anordnung für die abbildungsseitige Bildgenerierung;

Fig. 6     eine schematische Darstellung wesentlicher Komponenten einer Objektivbaugruppe, die im abbildungsseitigen Strahlengang des Mikroskops angeordnet sind

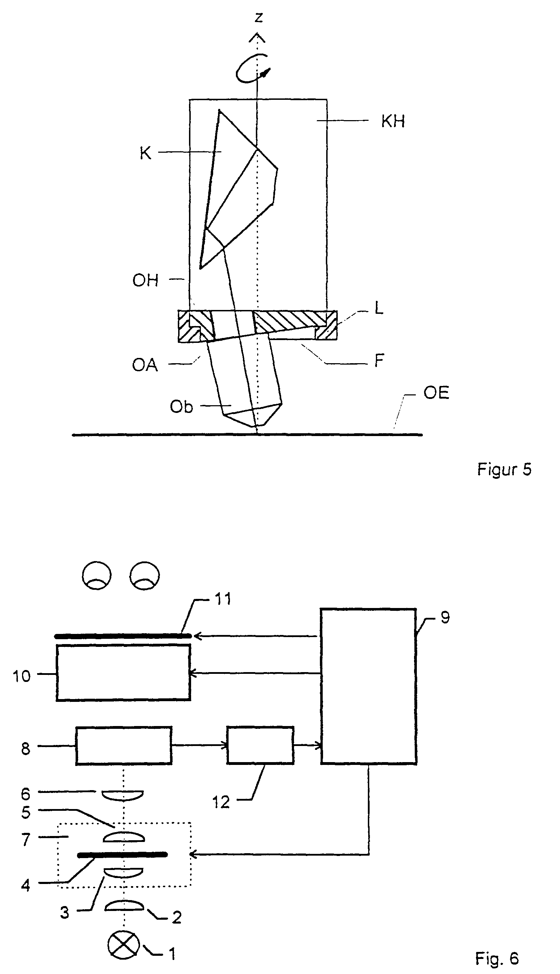

Fig. 5     eine technische Realisierungsform einer Anordnung für die abbildungsseitige Bildgenerierung;

Fig. 6     eine schematische Darstellung wesentlicher Komponenten eines interaktiven Computermikroskops zur Realisierung des Verfahrens gemäß Ausführungs-beispiel;

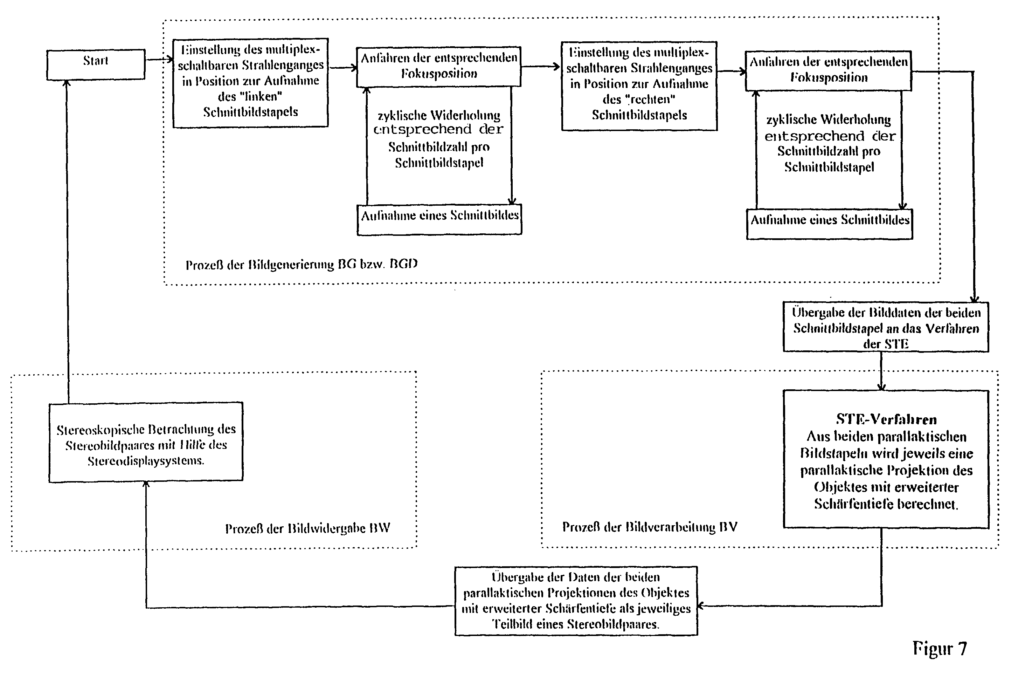

Fig. 7 einen schematischen Ablauf der Prozeßschritte unter Verwendung des beschriebenen Computermikroskops;

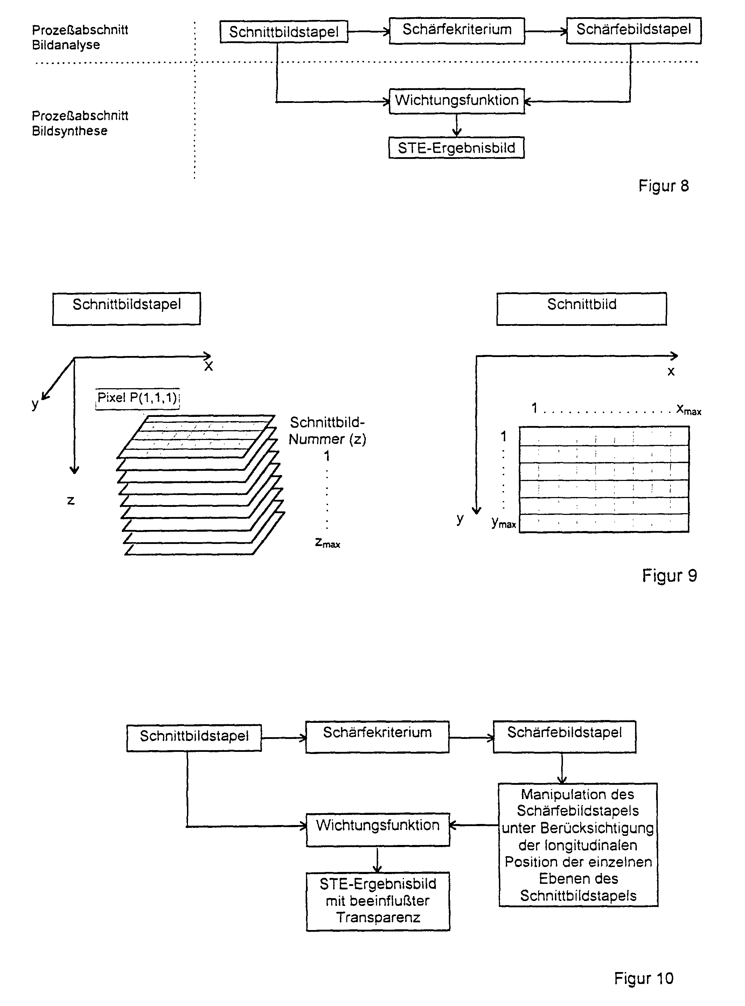

Fig. 8 eine prinzipielle Darstellung eines Verfahrens für eine korrekte schärfentiefenerweiterte Abbildung transparenter Strukturen;

Fig. 9 Bilddaten des Schnittbildstapels und des Schärfebildstapels in einem dreidimensionalen Array;

Fig. 10 den prinzipiellen Ablauf zur Erhöhung oder Verminderung der Transparenz einer schärfentiefenerweiterten Abbildung;

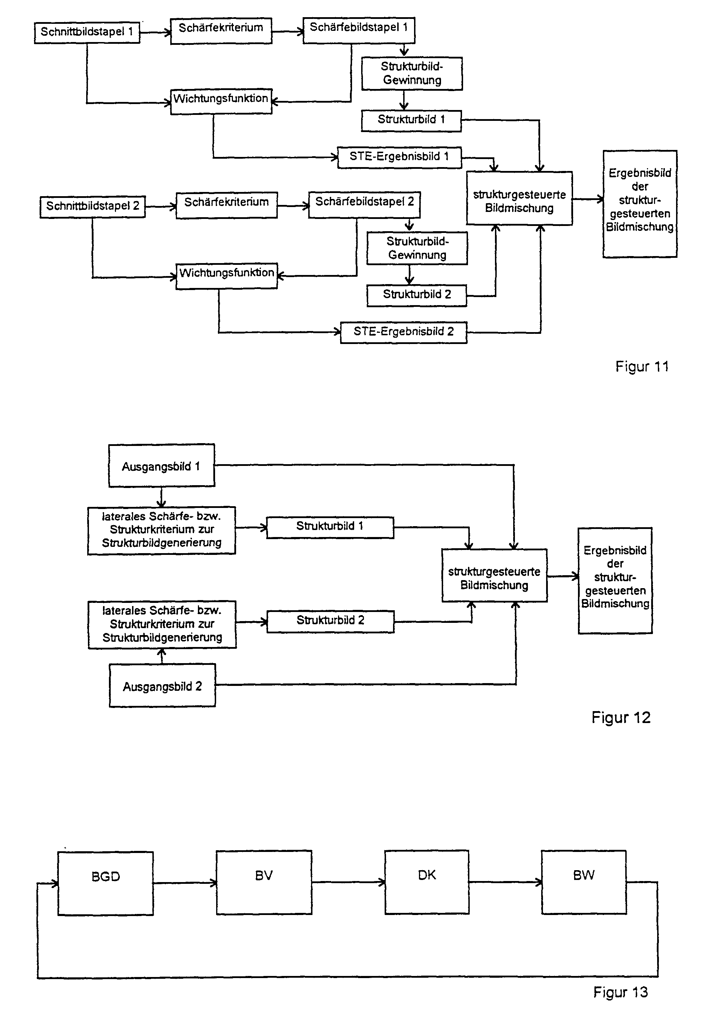

Fig.11 eine Darstellung zur Illustration der Einbindung der Strukturbild-Gewinnung und der strukturgesteuerten Bildmischung in das STE-Verfahren als Ausführungsbeispiel des strukturgesteuerten Mischverfahrens für zwei Ausgangsbilder;

Fig. 12 eine prinzipielle Darstellung der strukturgesteuerten Bildmischung von zwei Ausgangsbildern, die keine durch den STE-Prozeß zugeordnete Strukturdaten aufweisen; und

Fig. 13 die Einbindung eines Dynamik-Kompressionsschrittes in den Bildaufbereitungs- und Darstellungsprozeß.

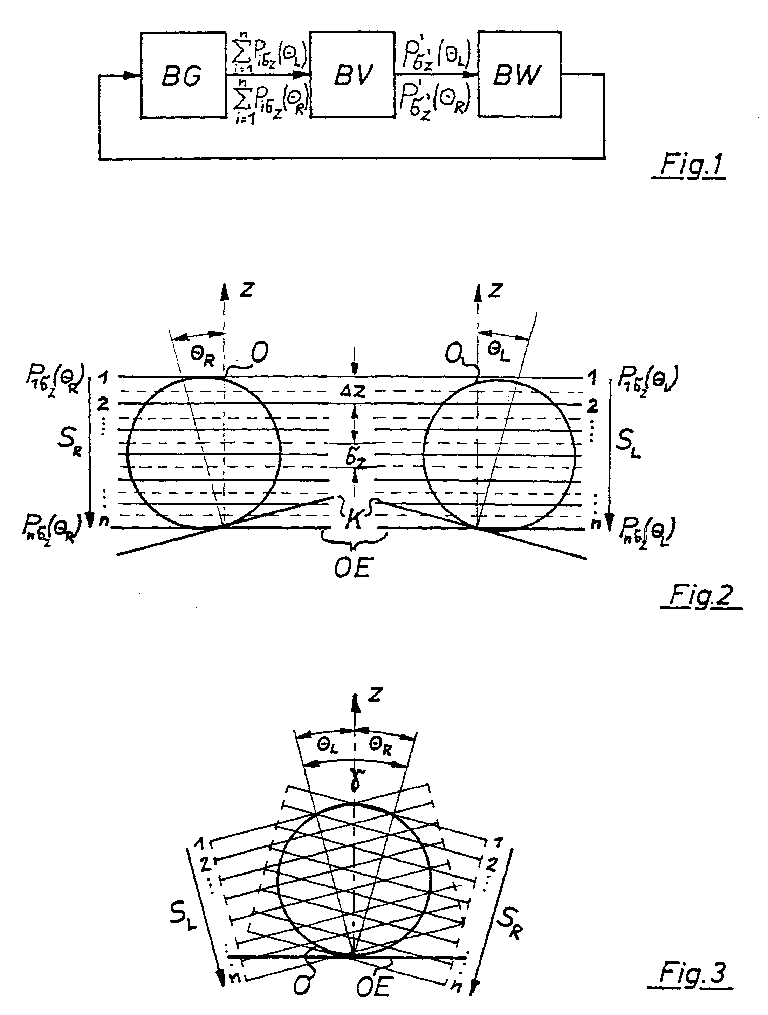

Beim Verfahren handelt es sich gemäß Fig. 1 um einen mehrstufigen, sequentiellen, sich zyklisch wiederholenden Prozeß.

Im Prozeßabschnitt der Bildgenerierung BG werden zwei Serien optischer Schnitte, $S_L$ und $S_R$, aufgenommen. Die Schnittserien können durch verschiedene Anordnungen zur Bildgenerierung erzeugt werden und weisen folgende Merkmale auf:

1 . Beide Schnittserien, die jeweils die Raumtiefe des mikroskopischen Objektes erfassen bestehen aus der gleichen Anzahl optischer Schnitte.

2. Jeder optische Schnitt enthält die Projektion des mikroskopischen Objektes in Form einer optischen Abbildung mit begrenzter Schärfentiefe $\delta z$ (Vgl. Fig. 2).

3. Die Projektionsrichtungen der optischen Abbildung des mikroskopischen Objektes sind innerhalb einer Schnittserie konstant.

4. Die Projektionsrichtungen der optischen Abbildungen beider Serien $S_L$ und $S_R$ bilden einen Winkel, der dem Konvergenzwinkel der Augenachse für stereoskopisches Sehen $\gamma$ entspricht.(Vgl. Fig. 3)

Der weitere Ablauf des Verfahrens weist folgende Merkmale auf.

1 . Die optischen Abbildungen der Schnittserien werden mit elektronischen Mitteln aufgenommen und in digitaler Form gespeichert.

2. Der Prozeß der Bildverarbeitung BV ist für beide Schnittserien $S_L$ und $S_R$ gleich.

3. Der Gesamtprozeß wird zyklisch wiederholt.

Die Erzeugung der Schnitterien $S_L$ und $S_R$ wird am Beispiel einer Anordnung zur Bildgenerierung im dingseitigen Strahlengang des Mikroskops verdeutlicht. Fig. 2 zeigt die Verhältnisse im Objektraum des Mikroskops.

Zur Erzeugung der Schnittserie $S_L$ befindet sich das mikroskopische Objekt O auf einem Kippadapter K. Dieser befindet sich auf dem Mikroskoptisch und neigt das mikroskopische Objekt O um den Kippwinkel $\theta_L$ relativ zur optischen Achse z des Mikroskops aus der Objektebene OE aus.

Zur Erzeugung der einzelnen optischen Schnitte bewegt sich der Mikroskoptisch um den Schnittabstand $\Delta z$ entlang der optischen Achse z des Mikroskops.

Der Schnittabstand $\Delta z$ ist kleiner als die Schärfentiefe $\delta z$ des optischen Systems.

Alle optischen Schnitte einer Schnittbildserie werden unter dem gleichen Kippwinkel erzeugt.

Die Erzeugung der Schnittserie $S_R$ erfolgt analog durch Neigen eines Kippadapters um den Kippwinkel $\theta_R$ relativ zur optischen Achse z des Mikroskops.

Die Kippwinkel $\theta_L$ und $\theta_R$ liegen in einer Ebene. Die Summe der Beträge von $\theta L$ und $\theta R$ entspricht dem Konvergenzwinkel $\gamma$ der Augenachsen für stereoskopisches Sehen. (Vgl. Fig. 3)

Die Erzeugung der Schnittserien $S_L$ und $S_R$ im Prozeßabschnitt der Bildgenerierung BG ist jedoch nicht nur durch Objekttranslation möglich.

Prinzipiell sind auch Anordnungen zur Bildgenerierung im beleuchtungsseitigen und abbildungsseitigen Strahlengang der lichtmikroskopischen Anordnung möglich.

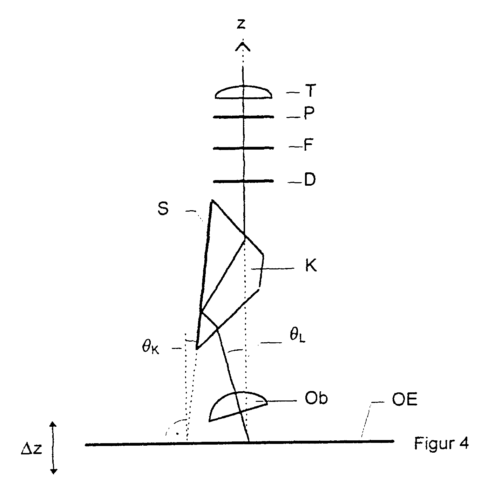

Fig. 4 zeigt als ein weiteres Beispiel eine Anordnung zur Bildgenerierung durch zeitmultiplex schaltbare Objektivbaugruppen, die im abbildungsseitigen Strahlengang des Mikroskops angeordnet sind.

Zur Erzeugung der Schnittserie $S_L$ befindet sich das mikroskopische Objekt in der Objektebene OE des Mikroskops.

Das auf Bildweite unendlich korrigierte Objektiv Ob wird um den Kippwinkel $\theta_L$ relativ zur optischen Achse z des Mikroskops geneigt.

Der Scheitelpunkt des Kippwinkels $\theta_L$ liegt im Fokus des Objektives Ob auf dem Schnittpunkt der optischen Achse z des Mikroskops mit der Objektebene OE.

Zur Erzeugung der einzelnen optischen Schnitte bewegt sich der Mikroskoptisch um den Schnittabstand $\Delta z$ entlang der optischen Achse z des Mikroskops. Der Schnittabstand $\Delta z$ ist kleiner als die Schärfentiefe $\delta z$ des optischen Systems. (Vgl. auch Fig. 2 und 3).

Alle optischen Schnitte einer Schnittserie werden bei gleichem Kippwinkel erzeugt. Die Erzeugung der Schnittserie $S_R$ erfolgt analog durch das Neigen des Objektivs Ob um den Kippwinkel $\theta_R$ relativ zur optischen Achse z des Mikroskops.

Im Prozeß der Bildgenerierung erfolgt die Einstellung der Kippwinkel $\theta_L$, und $\theta_R$ zeitlich seriell in alternierender Reihenfolge. Die Summe der Beträge von $\theta_L$ und $\theta_R$, entspricht dem Konvergenzwinkel $\gamma$ der Augenachsen für stereoskopisches Sehen. Ein Konvergenzwinkel von 4° führt bereits zu guten stereoskopischen Bildern.

Dem Objektiv Ob nachgeordnet ist eine Baugruppe K zur Korrektur des optischen Strahlenganges. Hier können verschiedene einfache oder zusammengesetzte optische Baugruppen eingesetzt werden, die bei geringer Bauhöhe möglichst ohne Farbstreuung arbeiten.

In Fig. 4 wird die Korrektur des Unendlichstrahlenganges am Beispiel des Einsatzes eines asymmetrisch betriebenen Spiegelprismas nach Amici dargestellt, dessen Spiegelfläche S um den Korrekturwinkel $\theta_K$ relativ zur optischen Achse z des Mikroskops geneigt ist. Nach der Korrekturbaugruppe K können weitere optische Baugruppen, wie z.B. DIC-Prismen D, Fluoreszenzfilterkombinationen F, Polarisator P und Tubuslinse T in der üblichen Weise angeordnet sein.

Fig. 5 zeigt eine Möglichkeit zur technischen Realisierung einer Anordnung für die abbildungsseitige Bildgenerierung.

Das Objekt O wird in der Objektivhalterung OH aufgenommen, welche als eine runde drehbare Platte durch das Lager L geführt wird und über um 180° zueinander versetzt Raststellungen verfügt. Die Drehung der Objektivhalterung OH kann vorteilhafterweise durch einen Elektromotor erfolgen (nicht gezeichnet).

Die Objektivaufnahme OA befindet sich auf einer Keilfläche F und ist exzentrisch zur Drehachse des Lagers L, welche mit der optischen Achse z des Mikroskops zusammenfällt, ausgeführt. Der Keilwinkel der Fläche F erzeugt bei Drehung der Objektivhalterung OH um 180° die beiden Kippwinkel $\theta_L$, und $\theta_R$ (vgl. Fig. 3).

Die ein Prisma aufweisende Korrekturbaugruppe K ist über die Justierhalterung KH fest mit der Objektivhalterung OH verbunden und führt deren Rotationsbewegung mit aus.

Beiden Anordnungen zur Bildgenerierung BG ist die zeitmultiplexe Ausnutzung des optischen Übertragungsweges des Mikroskops gemeinsam. Diese schafft die Voraussetzung zur Trennung der Informationskanäle für die Übertragung der Bildinformationen, die dem rechten bzw. linken Auge des Betrachters zugeordnet sind.

Im Unterschied zu früher vorgeschlagenen Lösungen für die Trennung der Informationskanäle, die auf einer Teilung der Objektiveintrittspupille des Mikroskops beruhen, ( räumliche Codierung der Kanaltrennung), kann durch zeitmultiplex arbeitende Anordnungen (zeitliche Codierung der Kanaltrennung) die volle Apertur des Mikroskops erhalten werden. Dadurch ist die Aufnahme stereoskopischer Bildformationen mit einer hohen Auflösung möglich.

Die in der Prozeßstufe der Bildgenerierung BG aufgenommenen Schnittserien S enthalten somit n optische Schnitte. Es sind die optischen Abbildungen der Projektion $P_i$ des mikroskopischen Objektes O unter dem Winkel $\theta$ mit der Schärfentiefe $\delta z$ nach folgender Beziehung:

$$S = \sum_{i=1}^{n} \left( P_i \delta z(\theta) \right)$$

Die Serien unterscheiden sich durch den alternierend wechselnden Kippwinkel $\theta$.

Durch den Kippwinkel $\theta_L$ wird die Serie $S_L$, durch den Kippwinkel $\theta_R$ wird sie Serie $S_R$ erzeugt.

In der Prozeßstufe der Bildverarbeitung BV werden aus den beiden Schnittserien $S_L$ und $S_R$ zwei schärfentiefenerweiterte Abbildungen rekonstruiert, die den parallaktischen Projektionen des mikroskopischen Objektes unter dem Konvergenzwinkel $\gamma$ entsprechen.

Aus n Abbildungen der Schärfentiefe $\delta z$ der Schnittserien $S_L$ bzw. $S_R$, die den Projektionen $P_i$ des mikroskopischen Objektes O unter dem Kippwinkel $\theta_L$ bzw. $\theta_R$ entsprechen, werden jeweils deren schärfentiefenerweiterte Abbildungen $P\delta z'(\theta_L)$ bzw. $P\delta z'(\theta_R)$ rekonstruiert.

$$\sum_{i=1}^{n} P_i \delta z(\theta_L) \to STE \to P\delta z'(\theta_L) \qquad \text{mit:} \qquad \Delta z < \delta z$$

$$\gamma = |\theta_L| + |\theta_R|$$

$$\sum_{i=1}^{n} P_i \delta z(\theta_R) \to STE \to P\delta z'(\theta_R) \qquad \qquad \delta z < \delta z' \leq n * \delta z$$

Geeignete Verfahren zur Schärfentiefenerweiterung (STE) sind aus der Literatur bekannt. (Vgl. Pieper, R.-J., Korpel, A., "Image processing for extended depth of field", Applied Optics 22, 144 (1983) und Häusler, G., Kömer, E., "A simple focussing criterion", Applied Optics 23, 2468 (1984).

In der Prozeßstufe der Bildwiedergabe BW wird diesen Projektionen die Funktion von zwei Teilbildern eines Stereobildpaares zugewiesen.
Das geschieht, indem deren schärfentiefenerweitete Abbildungen gespeichert und mit Hilfe geeigneter Stereoplaytechniken dem Betrachter wiedergegeben werden.
Hierfür sind verschiedene zeitserielle oder -parallele Stereodisplaytechniken bekannt.
(Vgl. UNOUE, S. "Video Microscopy" S. 454 u. 455; u. KAPPA Meßtechnik GmbH, "3D Video scan converter S M 100).

Indem jedes Teilbild nur von dem zugeordneten Auge gesehen wird, entsteht aus den beiden schärfetiefenerweiterten Abbildungen der Projektionen $P\delta z'(\theta_L)$ und $P\delta z'(\theta_R)$ des mikroskopischen Objektes dessen raumtiefenerweitertes stereoskopisches Bild.

Der Gesamtprozeß wird zyklisch wiederholt. Durch geeignete Bildgenerierungstechniken in Verbindung mit schnellen Bildverarbeitungsalgorithmen läßt sich die Zykluszeit verkürzen. Dadurch können zeitlich veränderliche mikroskopische Prozesse dieser Darstellungsform zugänglich gemacht werden.

Fig. 6 zeigt schematisch die wesentlichen Komponenten eines interaktiven Computermikroskops zur Realisierung des zuvor beschriebenen Verfahrens.

Im optischen Übertragungsweg einer weitgehend konventionellen lichtmikroskopischen Anordnung, bestehend aus der Lichtquelle 1, dem Kollektor 2, dem Kondensor 3, dem Mikroskoptisch 4, dem Objektiv 5 und der Tubuslinse 6 ist eine der zuvor beschriebenen Vorrichtungen zur Erzeugung parallaktischer Schnittbildserien 7 angeordnet.

Der Computer 9 steuert die Vorrichtung zur Erzeugung parallaktischer Schnittbildserien 7, die elektronische Kamera 8 und einen im Computer 9 enthaltenen Framegrabber 12 zur Digitalisierung des Videosignals der elektronischen Kamera.

Die Ergebnisbilder des STE-Verfahrens werden im RAM des Computers gespeichert und für die Bildwiedergabe über den Computermonitor 10, der gleichzeitig als Stereodisplay genutzt wird, zur Verfügung gestellt und bei Bedarf auf einen Massenspeicher übertragen.

Durch die Speicherung der STE-Ergebnisbilder ist der Prozeß der Bildgenerierung BG von dem der Bildwiedergabe BW (vgl. Fig. 1) entkoppelt. Die STE-Ergebnisbilder, bilden die beiden Teilbilder eines Stereobildpaares, welche alternierend mit hoher Bildwiederholfrequenz auf dem Computermonitor 10 wiedergegeben werden (vgl. Fig.6). Über einen elektrooptischen Shutter 11, der synchron zur alternierenden Bildwiedergabe durch den Computer gesteuert wird, ist eine flimmerfreie Beobachtung des Stereobildes möglich. Die Darstellung des Stereobildes ist prinzipiell auch mit anderen Stereodisplaytechniken, wie z.B. mit autostereoskopischen Anordnungen möglich.

Die Steuerung der einzelnen Komponenten ist so aufeinander abgestimmt, daß die Erzeugung und Aufnahme parallaktischer Schnittbildserien unter verschiedenen Aufnahmebedingungen automatisch erfolgen kann.

Figur 7 zeigt schematisch den Ablaufplan der einzelnen Prozeßschritte des beschriebenen Computermikroskopes zur automatischen Generierung der parallaktischen Schnittbildserien, deren Verarbeitung im STEProzeß zu schärfentiefenerweiterten parallaktischen Projektionen und die stereoskopische Bildwiedergabe der parallaktischen Projektionen zur räumlichen Darstellung des mikroskopischen Objektes.

Im Folgenden werden die funktionsbestimmenden softwarespezifischen Komponenten des Systems erläutert.

Dem Verfahren der nichtlinearen SchärfenTiefenErweiterung (STE) kommt im Gesamtsystem eine zentrale Bedeutung zu. Als Eingangsdaten derartiger Verfahren werden wie schon erwähnt Serien optischer Abbildungen aufgenommen und in Form von Schnittbildstapeln gespeichert.

Das Verfahren der STE besteht aus zwei Prozeßabschnitten. In einem ersten Prozeßabschnitt der Bildanalyse werden durch ein Schärfekriterium die Orte lokaler Schärfe in den einzelnen Abbildungen des Schnittbildstapels festgestellt und jedem Bildelement eines jeden Teilbildes des Schnittbildstapels ein Schärfewert zugewiesen.

In einem zweiten Prozeßabschnitt der Bildsynthese werden die Pixelintensitäten derjenigen Bildorte, die durch das Schärfekriterium als scharf erkannt wurden in das Ergebnisbild übernommen. Auf diese Weise wird die optische Abbildung des gesamten Objektraumes, der zuvor durch den Schnittbildstapel erfaßt wurde, mit erweiterter Schärfentiefe rekonstruiert.

Die Voraussetzung zum Einsatz des STE-Verfahrens für die hochauflösende Stereomikroskopie mit erweiterter Raumtiefe ist jedoch erst dann gegeben, wenn durch dieses Verfahren die Verarbeitung transparenter Objektstrukturen, wie sie in der Durchlichtmikroskopie auftreten, möglich wird.

Bisher konnten jedoch nur lichtundurchlässige Objektstrukturen verarbeitet werden. Der Grund dafür ist, daß für den Prozeßabschnitt der Bildsynthese zur Rekonstruktion des Ergebnisbildes nur jeweils diskrete Ebenen des Schnittbildstapels mit optimaler Fokusposition durch das Schärfekriterium gefunden und in das Ergebnisbild unverändert übernommen wurden. Mit transparenten Objekten, für die das Auftreten von mehreren scharfen, aber in unterschiedlichen Fokusebenen übereinanderliegenden Bildelementen charakteristisch ist, sind bekannte Verfahren zur Bildsynthese überfordert, da zur Rekonstruktion des Ergebnisbildes nur Informationen aus einer diskreten Schnittbildebene zugelassen werden. Für eine korrekte schärfentiefenerweiterte Abbildung transparenter Strukturen müssen jedoch auch als scharf erkannte, übereinanderliegende Objektstrukturen verschiedener Schnittbildebenen im Ergebnisbild darstellbar sein.

Entsprechend Figur 8 wird dieses Problem dadurch gelöst, daß zur synthetischen Rekonstruktion schärfentiefenerweiterter Abbildungen transparenter Objekte Bildinformationen aus allen Bildebenen des Schnittbildstapels zugelassen werden, wobei der Anteil der Bildinformation, der dabei aus den betreffenden Bildelementen der einzelnen Schnittbildebenen zur Rekonstruktion der Bildelemente des Ergebnisbildes dient, durch eine Wichtungsfunktion gesteuert wird. Als Argumente der Wichtungsfunktion dienen die im Prozeßabschnitt der Bildanalyse vom Schärfekriterium erzeugten pixelbezogenen Schärfewerte.

Auch bei nichttransparenten Objekten bringt die Korrelierung mehrerer Schnittbildebenen qualitative Vorteile bei der Bildrekonstruktion.

Für die Rekonstruktion des Ergebnisbildes im Prozeßabschnitt der Bildsynthese kommt der Wichtungsfunktion ebenso eine entscheidende Bedeutung zu, wie dem Schärfekriterium im Prozeßabschnitt der Bildanalyse.

Eine solche Wichtungsfunktion kann zum Beispiel in Form einer gewichteten Mittelwertbildung realisiert werden, die hier als Beispiel ausgeführt werden soll:

Wenn die Bilddaten des Schnittbildstapels und des Schärfebildstapels in einem dreidimensionalen Array, wie in Figur 9 ersichtlich, angeordnet sind, ergibt sich für die Intensität jedes Pixel E(xy) des Ergebnisbildes:

$$E(x;y) = \frac{\sum_{z=1}^{z\,max}\big(S(x;y;z) * P(x;y;z)\big)}{\sum_{z=1}^{z\,max}\big(S(x;y;z)\big)}$$

Dazu wurde folgendes vorausgesetzt:

$P(x;y;z)$ bezeichnet die Intensitäts-Daten des Pixels mit den Koordinaten (x;y) innerhalb des Schnittbildes Nr. z des Schnittbildstapels.

Analog zum Schnittbildstapel existiert ein "Schärfebildstapel", wobei jedem Pixel $P(x;y;z)$ eindeutig ein Schärfewert $S(x;y;z)$ zugeordnet ist.

Die Schärfewerte wurden im vorherigen Prozeßabschnitt der Bildanalyse für jeden Pixel(x;y;z) ermittelt.

Das Ergebnisbild hat den gleichen Aufbau und die gleichen Dimensionen wie ein Schnittbild des Schnittbildstapels. $E(x;y)$ bezeichnet die Intensitätsdaten des Pixels mit den Koordinaten (x;y) des Ergebnisbildes.

Weiterhin ist es von Vorteil, wenn man die Transparenz einer schärfentiefenerweiterten Abbildung eines transparenten oder teiltransparenten Objektes beeinflussen kann.

Durch die Steuerung der Bildtransparenz der schärfentiefenerweiterten Abbildung transparenter oder teiltransparenter Objekte wird es möglich, durch die intransparente Darstellung des transparenten Objektes dessen Oberflächengestalt deutlicher darzustellen.

Ebenso können durch eine Erhöhung der Transparenz der schärfentiefenerweiterten Abbildung eines transparenten Objektes Strukturdetails, die sonst von weiter vom liegenden Objektteilen verdeckt sind, deutlicher erkannt werden.

Wenn zwei schärfentiefenerweiterte Abbildungen eines transparenten Objektes als Stereobildpaar verwendet werden, bewirkt die Steigerung der Transparenz der Abbildungen eine vorteilhafte Erhöhung der Plastizität und der wahrnehmbaren Tiefenstaffelung des räumlichen Bildeindruckes.

Gemäß Figur 10 werden zur Erhöhung bzw. Verminderung der Transparenz einer schärfentiefenerweiterten Abbildung die vom Schärfekriterium ermittelten Schärfewerte in Abhängigkeit von ihrer longitudinalen Position innerhalb des Schärfebildstapels so verändert, daß bei der anschließenden synthetischen Rekonstruktion des Ergebnisbildes durch die Wichtungsfunktion die Bildinformationen der verschiedenen Ebenen des Schnittbildstapels entsprechend ihrer longitudinalen Position bevorzugt bzw. benachteiligt werden:

- zur Vergrößerung der Transparenz $S_M(X;Y;Z)=S(x;y;z)*(1 +F*(z-1))$

- zur Verringerung der Transparenz $S_M(x;y;z)=S(x;y;z)*(1 +F* (z_{max}-z))$

Es gelten folgende Voraussetzungen:

S(x;y;z) bezeichnet den Schärfewert, der dem Pixel
P(x;y;z) zugeordnet ist, wie schon bei der Erläuterung der Wichtungsfunktion beschrieben.
$S_M(x;y;z)$ ist der zur Steuerung der Transparenz veränderte Wert von S(x;y;z), der anstelle von S(x;y;z) von der Wichtungsfunktion zur synthetischen Rekonstruktion des Ergebnisbildes als Argument verwendet wird.
Der Faktor F ist eine positive Zahl, deren Wert den Grad der Beeinflussung der Transparenz steuert.
$Z_{max}$ ist die Schnittbildanzahl pro Schnittbildstapel.

Die Pixel- und Schärfewerte des obersten Schnittbildes im Schnittbildstapels haben die z-Koordinate 1.

In der Mikroskopie ist es oft notwendig, Abbildungen des Objektes, die mit unterschiedlichen Kontrastierungsverfahren aufgenommen wurden, zu überlagern, um zusätzliche Strukturinformationen zu erhalten. Dies geschieht üblicherweise durch die photographische Überlagerung. Ebenso ist auch die digitale oder analoge Mischung der Bilder möglich, die durch einfache Mittelwertbildung realisiert wird. Durch diese "konventionelle" Mischtechnik kann es jedoch vorkommen, daß wichtige, aussagekräftige Strukturdetails des einen Bildes im Ergebnisbild der Mischung durch inhaltslose, weniger wichtige Bildelemente eines anderen Bildes unterdrückt werden, da die verschiedenen Bildbereiche der Ausgangsbilder beim Mischprozeß gleichberechtigt sind.

Zur Vermeidung dieses Nachteils wird ein strukturgesteuertes Mischverfahren angewendet, bei welchem die Anteile der einzelnen Ausgangsbilder am Mischbild durch die ihnen zugeordneten zusätzliche Strukturdaten gesteuert werden, welche in Form eines Strukturbildes innerhalb des STE-Verfahrens aus dem Schärfebildstapel gewonnen und zusammen mit dem Ergebnisbild des STE-Verfahrens zur weiteren Verarbeitung im strukturgesteuerten Mischprozeß abgespeichert werden.

Figur 11 zeigt die Einbindung der Strukturbild-Gewinnung und der strukturgesteuerten Bildmischung in das Verfahren der STE als Ausführungsbeispiel des strukturgesteuerten Mischverfahrens für zwei Ausgangsbilder mit den ihnen zugeordneten Strukturdaten in Form von Strukturbildern.

Es sind prinzipiell beliebig viele Teilbilder als Ausgangsbilder für die strukturgesteuerte Bildmischung möglich.

Ein Beispiel für die Gewinnung eines Strukturbildes aus dem Schärfebildstapel ist die Aufsummierung der Schärfewerte des Schärfebildstapels in longitudinaler Richtung für jedes Element des Strukturbildes.

Wenn T(x;y) das Element des Strukturbildes mit den Koordinaten (x;y) bezeichnet, welches dem Pixel E(x;y) des Ergebnisbildes des STE-Verfahrens eindeutig zugeordnet ist, ergibt sich der Strukturwert T(x;y) durch:

$$T(x;y) = \sum_{Z=1}^{Z \, max} S(x;y;z)$$

S(x;y;z) bezeichnet dabei den Schärfewert des Pixels P(x;y;z) des Schnittbildstapels, wie schon bei der Beschreibung der Wichtungsfunktion erwähnt.

Falls das im strukturgesteuerten Mischverfahren zu verarbeitende Bild keine ihm zugeordneten Strukturdaten besitzt, können diese nachträglich durch Anwendung eines lateralen Schärfe- bzw. Strukturkriteriums auf das zu verarbeitende Bild erzeugt werden, wodurch dieses Bild dem strukturgesteuerten Mischverfahren zugänglich gemacht werden kann.

Die strukturgesteuerte Bildmischung von zwei Ausgangsbildern, die keine durch den STE-Prozeß zugeordnete Strukturdaten aufweisen, ist schematisch in Figur 12 dargestellt.

Der strukturgesteuerte Mischprozeß kann die Steuerung der Anteile der einzelnen Ausgangsbilder am Ergebnisbild des Mischprozesses mit Hilfe der den Ausgangsbildern zugeordneten Strukturdaten zum Beispiel wie folgt realisieren:

$$M(x,y) = \frac{\sum_{i=1}^{i\_max}\left(T_i(x;y) * E_i(x;y)\right)}{\sum_{i=1}^{i\_max}\left(T_i(x;y)\right)}$$

Es gelten folgende Voraussetzungen:

$E_i(x;y)$ bezeichnet die Intensitäts-Daten des Pixels mit den Koordinaten (x;y) des Ausgangsbildes Nummer i
$T_i(x;y)$ bezeichnet den Strukturwert des Strukturbildes, der dem Pixel $E_i(x;y)$ zugeordnet ist
i_max gibt die Anzahl der zu mischenden Ausgangsbilder an
M(x;y) bezeichnet die Intensitätsdaten des Pixels mit den Koordinaten (x;y) des Ergebnisbildes des Mischverfahrens.

Bei der Aufnahme eines Schnittbildstapels werden die einzelnen Teilbilder des Schnittbildstapels mit Hilfe einer CCD-Videokamera aufgenommen und anschließend digitalisiert.

Da der CCD-Wandler der Videokamera nur einen begrenzten Dynamikumfang hat, kommt es vor, daß helle Bilddetails überstrahlt sind oder dunkle Passagen keine Durchzeichnung aufweisen. Es ist selten möglich, ein Bild mit optimaler Belichtung in allen Bereichen zu erhalten. Bei überstrahlten oder zu dunklen, schlecht durchgezeichneten Bildteilen gehen jedoch wertvolle Informationen über das Objekt verloren.

Zur Vermeidung dieses Nachteils wird der Prozeßabschnitt der Bildgenerierung BG durch den Prozeßabschnitt der Bildgenerierung BGD ersetzt. Der Bildgenerierungsprozeß BGD generiert Schnittbildserien, welche Schnittbilder mit erweitertem Dynamikumfang enthalten und führt diese dem STE-Prozeß zu.

Der Prozeßabschnitt BGD unterscheidet sich vom Prozeßabschnitt BG durch folgende Merkmale:

- Anstelle der Aufnahme eines einzelnen Schnittbildes wird eine Belichtungsreihe aufgenommen.

- Die Fokusposition ist innerhalb einer Belichtungsreihe konstant.

- Die Anzahl der Teilbilder der Belichtungsreihe und deren Belichtungsabstufung wird derart gewählt, daß jeder Pixel des Bildes mindestens in einem Bild der Belichtungsreihe im optimalen Arbeitsbereich der Kamera erfaßt wurde.

- Aus den Teilbildern der Belichtungsreihe wird ein Schnittbild mit erweitertem Dynamikumfang gebildet.

- Das Schnittbild mit erweitertem Dynamikumfang ist Bestandteil eines Schnittbildstapels im STE-Prozeß.

Das aus dem STE-Prozeß resultierende Ergebnisbild mit erweitertem Dynamikumfang muß aufgrund des für übliche Displaysysteme zu hohen Dynamikumfanges vor dem Prozeßschritt der Bildwiedergabe einen Dynamikkompressionsschritt DK durchlaufen, um angezeigt werden zu können (vgl. Fig. 13).

Die Darstellung des stereoskopischen Bildes ist normalerweise speziellen Stereodisplaysystemen vorbehalten, deren Aufstellung zusätzlichen Raum beansprucht und Kosten verursacht.

Diese Nachteile werden vermieden, wenn gemäß einem Ausführungsbeispiel der Monitor des Computers gleichzeitig als Stereodisplay genutzt werden kann.

Zur stereoskopischen Wiedergabe des Stereobildpaares über den Computermonitor werden beide Teilbilder des Stereobildpaares jeweils als Vollbild in alternierender Reihenfolge mit einer Bildwiederholfrequenz oberhalb der Flimmergrenze wiedergegeben, wobei mit Hilfe entsprechender Shuttertechnik das jeweilige Stereoteilbild dem entsprechenden Auge zugeführt wird. Hierfür befindet sich das gesamte Stereobildpaar im Grafikspeicher der Grafikkarte und es erfolgt die Umschaltung zwischen der Wiedergabe des rechten und des linken Teilbildes durch Veränderung der Startadresse des auf dem Monitor dargestellten Grafikspeicherausschnittes

**Patentansprüche**

1. Verfahren zur hochauflösenden Stereomikroskopie mit erweiterter Raumtiefe unter Verwendung eines konventionellen Lichtmikroskops sowie einer digitalen Elektronik zur pixelweisen Speicherung und Verarbeitung der Bilddaten, wobei zur stereomikroskopischen Darstellung des mikroskopischen Objekts auf zwei parallaktische Schnittbildstapelserien eine nichtlineare Schärfentiefenerweiterung angewendet wird und hierfür in einem ersten Prozeßschritt der Bildanalyse durch ein Schärfekriterium die Orte lokaler Schärfe in den einzelnen Abbildungen der Schnittbildstapel festgestellt und jedem Bildelement eines jeden Teilbilds der Schnittbildstapel ein Schärfewert zugewiesen wird, sowie in einem zweiten Prozeßschritt der Bildsynthese die Pixelintensitäten derjenigen Bildorte, die durch das Schärfekriterium als scharf erkannt wurden, in das Ergebnisbild übergehen, so daß die optische Abbildung des gesamten Objektraums, der zuvor durch den Schnittbildstapel erfaßt wurde, rekonstruierbar ist, wobei bei der Rekonstruktion schärfentiefenerweiterter Abbildungen transparenter Objekte Bildinformationen aus allen Bildebenen der Schnittbildstapel zugelassen werden, wobei der Anteil der Bildinformation, der dabei der Rekonstruktion der Elemente des Ereignisbilds dient, durch eine Wichtungsfunktion bestimmt wird.

2. Verfahren nach Anspruch 1,
   **dadurch gekennzeichnet, daß**
   zur Stereokanaltrennung der optische Übertragungsweg des verwendeten Lichtmikroskops durch zeitlich serielle Erzeugung der parallaktischen Schnittbildserien zeitmultiplex ausgenutzt wird.

3. Verfahren nach Anspruch 1,
   **dadurch gekennzeichnet, daß**
   die Argumente der Wichtungsfunktion jeweils die vom Schärfekriterium gebildeten Schärfewerte der Bildelemente sind.

4. Verfahren nach Anspruch 3,
   **dadurch gekennzeichnet, daß**
   zur Erhöhung oder zur Verminderung der Transparenz einer schärfetiefenerweiterten Abbildung die vom Schärfekriterium ermittelten Schärfewerte in Abhängigkeit von ihrer longitudinalen Position innerhalb des Schärfebildstapels so verändert werden, daß bei der anschließenden synthetischen Rekonstruktion des Ergebnisbilds durch die Wichtungsfunktion die Bildinformationen der verschiedenen Ebenen des Schnittbildstapels entsprechend ihrer longitudinalen Position bevorzugt oder benachteiligt werden.

5. Verfahren nach einem der vorangegangenen Ansprüche,
   **dadurch gekennzeichnet, daß**
   zur strukturgesteuerten Bildmischung den an der Bildmischung beteiligten Ausgangsbildern jeweils Strukturdaten in Form von Strukturbildern zugeordnet sind, welche den Anteil der einzelnen Ausgangsbilder am Ergebnisbild der Bildmischung bestimmen.

6. Verfahren nach Anspruch 5,
   **dadurch gekennzeichnet, daß**
   die Ausgangsbilder der strukturgesteuerten Bildmischung Ergebnisbilder des Schärfentiefenerweiterungsschritts sind, wobei die zugeordneten Strukturdaten aus dem Schärfebildstapel dieses Schritts gewonnen werden.

7. Verfahren nach Anspruch 5,
   **dadurch gekennzeichnet, daß**
   zur Verarbeitung von beliebigen Ausgangsbildern die zugehörigen Strukturdaten durch Anwendung eines lateralen Schärfekriteriums auf das zu mischende Ausgangsbild gewonnen werden.

8. Verfahren nach einem der vorangegangenen Ansprüche, **dadurch gekennzeichnet, daß**
   die stereoskopische Bildwiedergabe auf einem Personalcomputer-Monitor erfolgt, wobei zur alternierenden Wiedergabe der beiden Stereoteilbilder sich das gesamte Stereobild in einem Grafikspeicher einer Grafikkarte des Personalcomputers befindet und die Umschaltung zwischen der Wiedergabe des rechten und des linken Teilbilds durch Veränderung einer Startadresse des auf dem Personalcomputer-Monitor dargestellten Grafikspeicherausschnitts erfolgt.

9. Verfahren nach einem der vorangegangenen Ansprüche,
**dadurch gekennzeichnet, daß**
zur Verbesserung der Dynamik bei der Bildgenerierung eine Belichtungsreihe mit konstanter Fokusposition aufgenommen wird, wobei die Anzahl der Teilbilder derart gewählt ist, daß jedes Pixel des Bildes mindestens in einem Bild der Reihe im optimalen Arbeitsbereich der Bildaufnahmeeinrichtung erfaßt und wobei weiterhin aus den Teilbildern der Belichtungsreihe ein Schnittbild mit erweitertem Dynamikumfang erstellt wird.

10. Anordnung zur Durchführung des Verfahrens zur hochauflösenden Stereomikroskopie gemäß einem der Ansprüche 1 bis 9,
**dadurch gekennzeichnet, daß**
zur Erzeugung parallaktischer Schnittbildserien das mikroskopische Objekt auf einem elektrisch ansteuerbaren Kippadapter angeordnet ist.

11. Anordnung nach Anspruch 10,
**dadurch gekennzeichnet, daß**
zur Erzeugung parallaktischer Schnittbildserien alternativ ein Mikroskopobjektiv auf einer gegenüber der Objektebene ausgebildeten Keilfläche einer drehbar gelagerten Objektivhalterung exzentrisch zur optischen Achse des Mikroskops angeordnet und mit einem Prisma zur Korrektur des Strahlengangs mechanisch verbunden ist.

12. Anordnung nach einem der Ansprüche 10 oder 11,
**dadurch gekennzeichnet, daß**
die Anordnung aus einem konventionellen Lichtmikroskop mit einer Vorrichtung zur Generierung parallaktischer Schnittbildserien besteht und eine elektronische Datenverarbeitungseinheit aufweist, wobei die Aufnahme parallaktischer Schnittbildserien sowie deren Weiterverarbeitung zur schärfetiefenerweiterten Abbildung der parallaktischen Projektionen des mikroskopischen Objekts sowie deren stereoskopische Wiedergabe zur räumlichen Darstellung des mikroskopischen Objekts unter Steuerung durch die elektronische Datenverarbeitungseinheit automatisch erfolgt.

**Claims**

1. A method for high-resolution stereomicroscopy with extended spatial depth using a conventional optical microscope as well as digital electronics for the pixelwise storage and processing of image data, with a non-linear depth-of-field extension being applied to two parallactic split image stack series for the stereomicroscopic presentation of the microscopic object, for which purpose in a first process step of the image analysis the sites of local definition in the individual images of the split image stack are determined by a definition criterion and each pixel of each partial image of the split image stack is assigned a definition value, and in a second process step of the image synthesis the pixel intensities of those image sites which have been detected as being defined by the definition criterion are transferred into the resultant image, so that the optical imaging of the entire object space which previously was covered by the split image stack can be reconstructed, with image information from all image levels of the split image stack being allowed in the reconstruction of depth-of-field extending images of transparent objects, with the proportion of image information, which serves to reconstruct the resultant image being determined by a weighting function.

2. The process according to Claim 1,
**characterised in that**
the optical transmission path of the employed optical microscope is utilized for stereo channel separation in a time-division multiplexing manner by a time-serial generation of the parallactic split image stack series.

3. The process according to Claim 1,
**characterised in that**
the arguments of the weighting function are the definition values of the pixels respectively formed by the definition criterion.

4. The process according to Claim 3,
**characterised in that**

for increasing or decreasing the transparency of a depth-of-field extended image, the definition values determined by the definition criterion are varied depending on the longitudinal position in the split image stack in such a manner that in the subsequent synthetic reconstruction of the resultant image by the weighting function the image information of the various levels of the split image stack, depending on its longitudinal position, is either considered or not considered.

5. The process according to one of the previous claims,
   **characterised in that**
   for the pattern-controlled image mixing, pattern data in the form of pattern images is assigned to the initial images involved in the image mixing, which determines the proportion of the individual initial images of the resultant image of the image mixing.

6. The process according to Claim 5,
   **characterised in that**
   the initial images of the pattern-controlled image mixing are resultant images of the depth-of-field extension step, with the assigned pattern data being obtained from the split image stack.

7. The process according to Claim 5,
   **characterised in that**
   for processing of any initial images, the associated pattern data is obtained by applying a lateral definition criterion to the initial image to be mixed.

8. The process according to one of the previous claims,
   **characterised in that**
   the stereoscopic image reproduction is effected on a monitor of a personal computer, with the entire stereo image being stored in a graphics memory of a graphics board of the personal computer for the alternating reproduction of the two stereo partial images, and the switching between the reproduction of the right hand and the left hand partial image is effected by changing a start address of the graphics memory section displayed on the monitor of the personal computer.

9. The process according to one of the previous claims,
   **characterised in that**
   for enhancing the dynamics in the image generation, an exposure series with constant focus position is taken, with the number of partial images being selected in such a manner that each pixel of the image is captured at least in one image of the series in the optimal operating range of the image capturing device, and with a split image with extended dynamics range being prepared from the partial images of the exposure series.

10. An arrangement for carrying out the process for high-resolution stereomicroscopy according to one of Claims 1 to 9,
    **characterised in that**
    the microscopic object is arranged on an electrically controllable tilting adapter for the generation of parallactic split image series.

11. The arrangement according to Claim 10,
    **characterised in that**
    for the generation of parallactic split image series a microscope objective is alternatively arranged eccentrically with respect to the optical axis of the microscope on a wedge area formed opposite the object plane of a rotatably supported objective holder and mechanically connected with a prism for the correction of the beam path.

12. The arrangement according to Claim 10 or 11,
    **characterised in that**
    the arrangement consists of a conventional optical microscope with an apparatus for the generation of parallactic split image series and comprises an electronic data processing unit, with the taking of parallactic split image series as well as their further processing for the depth-of-field extended imaging of the parallactic projections of the microscopic objects as well as their stereoscopic reproduction for the three-dimensional presentation of the microscopic object being carried out automatically under the control of the electronic data processing unit.

**Revendications**

1. Procédé de stéréo-microscopie à haute résolution et à profondeur spatiale augmentée en utilisant un microscope optique traditionnel ainsi qu'une unité électronique numérique pour la mémorisation et le traitement de données-image pixel par pixel, dans lequel, pour l'illustration stéréo-microscopique de l'objet microscopique, on applique un élargissement non linéaire de la profondeur de champ sur deux séries parallactiques d'empilements d'images en coupe et on constate à cet effet, dans une première étape de processus de l'analyse d'image, les emplacements de netteté locale dans les images individuelles des empilements d'images en coupe par un critère de netteté et on associe une valeur de netteté à chaque élément d'image de chaque image partielle des empilements d'images en coupe, et dans une deuxième étape de processus de la synthèse d'image, les intensités des pixels de ceux des emplacements d'image reconnus comme nets par le critère de netteté sont intégrées dans l'image résultante, de sorte que la représentation optique de la totalité de l'espace objet saisi auparavant par l'empilement d'images en coupe est susceptible d'être reconstruite, et lors de la reconstruction des représentations élargies vis-à-vis de la profondeur de champ d'objets transparents on admet les informations-images de tous les niveaux d'image des empilements d'images en coupe, et la proportion de l'information-images servant ici à la reconstruction des éléments de l'image résultante est déterminée par une fonction de pondération.

2. Procédé selon la revendication 1, **caractérisé en ce que** pour la séparation des canaux stéréoscopiques, on exploite par multiplexage temporel le trajet de transmission optique du microscope optique utilisé par une génération sérielle dans le temps des séries parallactiques d'images en coupe.

3. Procédé selon la revendication 1, **caractérisé en ce que** les arguments de la fonction de pondération sont les valeurs de netteté respectives des éléments d'image formées par le critère de netteté.

4. Procédé selon la revendication 3, **caractérisé en ce que** pour augmenter ou pour réduire la transparence d'une représentation élargie à l'égard de la profondeur de champ, on modifie les valeurs de netteté déterminées par le critère de netteté en fonction de leur position longitudinale à l'intérieur de l'empilement d'images nettes, de telle sorte que lors de la reconstruction synthétique successive de l'image résultante, les informations-images des niveaux différents de l'empilement d'images en coupe sont favorisées ou défavorisées par la fonction de pondération en fonction de leur position longitudinale.

5. Procédé selon l'une des revendications précédentes, **caractérisé en ce que** pour le mélange d'images commandé en fonction de la structure, on associe aux images de départ participant au mélange d'images des données de structure respectives sous forme d'images de structure, qui déterminent la proportion des images de départ individuelles dans l'image résultante du mélange d'images.

6. Procédé selon la revendication 5, **caractérisé en ce que** les images de départ du mélange d'images commandé en fonction de la structure sont des images résultantes de l'étape d'élargissement de la profondeur de champ, les données de structure associées étant obtenues à partir de l'empilement d'images nettes de cette étape.

7. Procédé selon la revendication 5, **caractérisé en ce que** pour traiter des images de départ quelconques, on obtient les données de structure associées par application d'un critère de netteté latéral sur l'image de départ à mélanger.

8. Procédé selon l'une des revendications précédentes, **caractérisé en ce que** la reproduction d'image stéréoscopique s'effectue sur un moniteur d'ordinateur personnel, et pour la reproduction alternante des deux images stéréoscopiques partielles, l'ensemble de l'image stéréoscopique se trouve dans une mémoire graphique d'une carte graphique de l'ordinateur personnel, et la commutation entre la reproduction de l'image partielle de droite et de l'image partielle de gauche s'effectue par changement d'une adresse de départ du détail dans la mémoire graphique illustré sur le moniteur de l'ordinateur personnel.

9. Procédé selon l'une des revendications précédentes, **caractérisé en ce que** pour améliorer la dynamique de la génération d'image, on enregistre une série d'expositions à position focale constante, le nombre des images partielles étant choisi tel que chaque pixel de l'image est saisi au moins dans une image de la série dans la plage de travail optimal du dispositif d'enregistrement d'image, et de plus, on établit à partir des images partielles de la série d'expositions une image en coupe à configuration dynamique élargie.

10. Agencement pour mettre en oeuvre le procédé pour la stéréo-microscopie à haute résolution selon l'une des revendications 1 à 9, **caractérisé en ce que** pour générer des séries parallactiques d'images en coupe, l'objet microscopique est agencé sur un adaptateur basculant à pilotage électrique.

11. Agencement selon la revendication 10, **caractérisé en ce que** pour générer des séries parallactiques d'images en coupe, un objectif de microscope est agencé alternativement sur une surface en coin réalisée par rapport au plan objet d'une monture d'objectif montée mobile en rotation, excentriquement par rapport à l'axe optique du microscope, et est relié par voie mécanique à un prisme pour corriger la marche des rayons.

12. Agencement selon l'une ou l'autre des revendications 10 et 11, **caractérisé en ce que** l'agencement est constitué par un microscope optique traditionnel comportant un dispositif pour générer des séries parallactiques d'images en coupe et une unité électronique de traitement de données, l'enregistrement de séries parallactiques d'images en coupe ainsi que la poursuite de leur traitement pour obtenir la représentation élargie à l'égard de la profondeur de champ des projections parallactiques de l'objet microscopique, ainsi que leur reproduction stéréoscopique pour l'illustration dans l'espace de l'objet microscopique s'effectuent automatiquement par la commande par l'unité électronique de traitement de données.

_Fig.1_

_Fig.2_

_Fig.3_

z

— T

— P

— F

— D

S

K

$\theta_K$

$\theta_L$

Ob

OE

$\Delta z$

Figur 4

Figur 5

Fig. 6

EP 0 808 474 B1

Figur 7

**Prozeß der Bildgenerierung BG bzw. BGD**

Start

Einstellung des multiplex-schaltbaren Strahlenganges in Position zur Aufnahme des "linken" Schnittbildstapels

Anfahren der entsprechenden Fokusposition

zyklische Wiederholung entsprechend der Schnittbildzahl pro Schnittbildstapel

Aufnahme eines Schnittbildes

Einstellung des multiplex-schaltbaren Strahlenganges in Position zur Aufnahme des "rechten" Schnittbildstapels

Anfahren der entsprechenden Fokusposition

zyklische Wiederholung entsprechend der Schnittbildzahl pro Schnittbildstapel

Aufnahme eines Schnittbildes

Übergabe der Bilddaten der beiden Schnittbildstapel an das Verfahren der STE

**Prozeß der Bildverarbeitung BV**

STE-Verfahren
Aus beiden parallaktischen Bildstapeln wird jeweils eine parallaktische Projektion des Objektes mit erweiterter Schärfentiefe berechnet.

Übergabe der Daten der beiden parallaktischen Projektionen des Objektes mit erweiterter Schärfentiefe als jeweiliges Teilbild eines Stereobildpaares.

**Prozeß der Bildwiedergabe BW**

Stereoskopische Betrachtung des Stereobildpaares mit Hilfe des Stereodisplaysystems.

18

Prozeßabschnitt Bildanalyse

Prozeßabschnitt Bildsynthese

Schnittbildstapel → Schärfekriterium → Schärfebildstapel

Wichtungsfunktion

STE-Ergebnisbild

Figur 8

Schnittbildstapel

Pixel P(1,1,1)

Schnittbild-Nummer (z)
1
$z_{max}$

Schnittbild

$1 \ldots \ldots \ldots x_{max}$

Figur 9

Schnittbildstapel → Schärfekriterium → Schärfebildstapel

Manipulation des Schärfebildstapels unter Berücksichtigung der longitudinalen Position der einzelnen Ebenen des Schnittbildstapels

Wichtungsfunktion

STE-Ergebnisbild mit beeinflußter Transparenz

Figur 10

Schnittbildstapel 1 → Schärfekriterium → Schärfebildstapel 1

Strukturbild-Gewinnung

Wichtungsfunktion

Strukturbild 1

STE-Ergebnisbild 1

Schnittbildstapel 2 → Schärfekriterium → Schärfebildstapel 2

Strukturbild-Gewinnung

Wichtungsfunktion

Strukturbild 2

STE-Ergebnisbild 2

strukturgesteuerte Bildmischung

Ergebnisbild der struktur-gesteuerten Bildmischung

Figur 11

Ausgangsbild 1

laterales Schärfe- bzw. Strukturkriterium zur Strukturbildgenerierung

Strukturbild 1

laterales Schärfe- bzw. Strukturkriterium zur Strukturbildgenerierung

Strukturbild 2

Ausgangsbild 2

strukturgesteuerte Bildmischung

Ergebnisbild der struktur-gesteuerten Bildmischung

Figur 12

BGD → BV → DK → BW

Figur 13